# EUROPEAN PATENT APPLICATION

(11) **EP 2 793 181 A1**
(43) Date of publication of application: **22.10.2014**
(21) Application number: 12857415.9
(22) Date of filing: 11.12.2012
(51) Int. Cl.: G06Q 50/04, G02C 13/00

(54) **DESIGN DATA PROVISION SYSTEM, DATA SERVER, DESIGN DATA PROVISION METHOD, SPECIFICATION DATA PROVISION METHOD**

(30) Priority: 13.12.2011 JP 2011272617
(71) Applicant: HOYA LENS MANUFACTURING PHILIPPINES INC., Cavite (PH)
(72) Inventor: KATO, Kazutoshi, Suwa-shi Nagano 392-8502 (JP); GUNJI, Nobuhiro, Suwa-shi Nagano 392-8502 (JP)
(74) Representative: Betten & Resch
(86) International application number: PCT/JP2012/007915
(87) International publication number: WO 2013/088705

(57) **Abstract**

There is provided a data server capable of improving a quality of a spectacle lens as a finished product and reducing a cost, even if a semi-finished lens having a complicated shape is used, the data server comprising: a specification data acquisition unit configured to acquire specification data of a semi-finished lens transmitted from a first terminal; a specification data storage unit configured to store the specification data acquired by the specification data acquisition unit; and a Specification data output unit configured to outputs the specification data stored in the specification data storage unit, to a second terminal.

## Description

### Technical Field

The present invention relates to a design data providing system, a data server, a design data providing method, and a specification data providing method.

### Description of Related Art

A spectacle lens includes a progressive addition lens used for a case when an adjustment power of an eye is reduced. The progressive addition lens includes a distance portion used for a distance vision, a near portion used for a near vision, and an intermediate portion connecting the distance portion and the near portion. The progressive addition lens is configured so that curvature forming the distance portion, the near portion, and the intermediate portion is added on an eyeball side surface (surface opposed to an eyeball when wearing spectacles) or an object side surface (surface opposed to the eyeball side surface).

Generally, there are following cases regarding the progressive addition lens, such as a case that a semi-finished lens is manufactured by a lens processor, which is then edged into a progressive addition lens based on a prescription of a user and is sold to a spectacle shop, and a case that the semi-finished lens purchased from a semi-finished manufacturer by the lens processor, which is then edged into the progressive addition lens and is sold to the spectacle shop. The semi-finished lens is a lens in which one of the surfaces of the lens is finished into a specific shape. A spectacle lens is manufactured so as to satisfy a prescription (for example, diopter and angle of astigmatism) by cutting and polishing the other surface of the semi-finished lens.

However, the design data of the progressive addition lens is complicated, and therefore when the lens processor purchases and applies edging to the semi-finished lens, there is a problem that a desired progressive addition lens cannot be designed if the design data of the progressive addition lens is created by the lens processor.

Therefore, there is a conventional example as follows: design data is prepared by a lens design manufacturer based on prescription data, which is then provided to a processor of the progressive addition lens through a network, to thereby manufacture a desired progressive addition lens by the lens processor based on the prescription data (patent document 1).

### Prior Art Document

### Patent Document

Patent document 1: Japanese Patent Laid Open Publication No.2009-20536

### Summary of the Invention

### Problem to be solved by the Invention

In the design data providing system of patent document 1, it is a precondition that the lens processor purchases the semi-finished lens from the lens design manufacturer. Therefore, for example, if the lens processor purchases the semi-finished lens from a different manufacturer from the lens design manufacturer, the shape of the semi-finished lens does not match the design data, and the progressive addition lens having a desired shape cannot be obtained in some cases. Therefore, the semi-finished manufacturer registers a specification of the semi-finished lens in a production management system for example, and the registered specification data is obtained by the lens design manufacturer through a network. Thus, design based on the specification of the semi-finished lens can be realized. However, an arbitrary product can be used as the semi-finished lens, and therefore the quality of the semi-finished lens as a product does not satisfy the quality estimated by the lens design manufacturer in some cases. Namely, the quality of the semi-finished lens cannot be grasped by the lens design manufacturer, and therefore the quality of the spectacle lens as a finished product processed based on the specification, cannot be sufficiently guaranteed in some cases.

An object of the present invention is to provide a design data providing system, a data server, a design data providing method, and a specification data providing method, capable of guaranteeing the quality of the spectacle lens as the finished product.

### Means for solving the Problem

According to a first aspect of the present invention, there is provided a design data providing system, including
a data server, a first terminal, a second terminal, and a third terminal connected via a communication line,
the data server including:
a Specification data acquisition unit configured to acquire specification data of a semi-finished lens;
a specification data storage unit configured to store the specification data;
a specification data output unit configured to output the specification data stored in the specification data storage unit, to the second terminal;
a counting unit configured to count output frequency of the specification data;
a use fee calculation unit configured to calculate a use fee of the specification data based on the output frequency; and
a use fee transmission unit configured to transmit information regarding the use fee calculated by the use fee calculation unit, to the first terminal,
the first terminal including:
a Specification data transmission unit configured to transmit the specification data to the data server; and
a use fee reception unit configured to receive the information regarding the use fee transmitted from the use fee transmission unit,
the second terminal including:
a download unit configured to acquire the specification data;
a design data generation unit configured to generate design data of the spectacle lens based on the specification data; and
a design data output unit configured to output the design data to the third terminal,
the third terminal including:
a design data acquisition unit configured to acquire the design data outputted from the design data output unit.

According to this structure, the data server includes the specification data acquisition unit configured to acquire the specification data of the semi-finished lens from the first terminal, and the first terminal includes the specification data transmission unit configured to transmit the specification data to the data server. Therefore, the specification data transmitted by the first terminal can be acquired by the data server. The data server includes the specification data output unit configured to output the specification data acquired by the specification data acquisition unit, to the second terminal, and the second terminal includes the download unit configured to acquire the specification data, and the design data generation unit configured to generate the design data of the spectacle lens based on the specification data, and therefore the design data can be generated based on the specification data acquired from the data server. Further, the second terminal includes the design data output unit configured to output the design data to the third terminal, and the third terminal includes the design data acquisition unit configured to acquire the design data, and therefore the design data based on the specification data can be acquired by the third terminal. Further, the data server includes the counting unit that counts output frequency of the specification data, and the use fee calculation unit configured to calculate the use fee based on output frequency, the use fee transmission unit configured to transmit the information regarding the use fee to the first terminal; and the first terminal includes the use fee reception unit configured to receive the information regarding the use fee, and therefore the information regarding the use fee based on output frequency of the specification data can be transmitted to the second terminal.

Accordingly, for example, since the use fee of the specification data can be requested through the first terminal, the quality of the specification data stored in the data server can be improved. Accordingly, the quality of the spectacle lens edged based on the design data can be guaranteed.

According to an aspect of the present invention, there is provided a data server including:
a specification data outputs unit configured to output specification data of a semi-finished lens;
a counting unit configured to count output frequency of the specification data;
a use fee calculation unit configured to calculate a use fee of the specification data based on the output frequency; and a use fee transmission unit configured to transmit information regarding the use fee calculated by the use fee calculation unit.

According to this structure, in the data server, the specification data output unit outputs the specification data of the semi-finished lens. The counting unit counts output frequency of the specification data, and based on the output frequency, the use fee of the specification data is calculated by the use fee calculation unit. The calculated use fee is transmitted by the use fee transmission unit.

Accordingly, for example, the quality of the semi-finished lens outputted from the data server can be improved by charging the use fee of the specification data, using the data server of this aspect.

Further, for example, the quality of the spectacle lens which is edged based on the design data can be guaranteed by using the specification data outputted from the specification data output unit for designing the lens.

According to an aspect of the present invention, there is provided a design data providing method, including:
outputting specification data of a semi-finished lens to a first terminal by a data server;
calculating a use fee of the specification data by the data server based on the output frequency;
transmitting information regarding the use fee, to a second terminal by the data server;
generating design data by the first terminal based on the specification data; and
outputting the design data to a third terminal by the first terminal.

According to this structure, the data server outputs the specification data of the semi-finished lens, to the first terminal. Further, the counting unit counts the output frequency of the specification data, and based on the output frequency, the use fee calculation unit calculates the use fee, and the use fee transmission unit transmits the information regarding the use fee. Accordingly, for example, if the information regarding the use fee is transmitted to the provider of the specification data, the data server of this aspect can be used for charging the use fee of the specification data, and therefore the quality of the semi-finished lens whose specification data is outputted from the data server, can be improved. Accordingly, the quality of the spectacle lens which is edged based on the design data, can be guaranteed.

According to an aspect of the present invention, there is provided a specification data providing method, including:
outputting specification data of a semi-finished lens by a specification data output unit;
counting output frequency of the specification data by a counting unit;
calculating a use fee of the specification data by a use fee calculation unit based on the output frequency; and
transmitting information regarding the calculated use fee by a use fee transmission unit.

According to this structure, the specification data output unit outputs the specification data of the semi-finished lens. Further, the counting unit counts the output frequency of the specification data, and based on the output frequency, the use fee calculation unit calculates the use fee, and the use fee transmission unit transmits the information regarding the use fee.

Accordingly, for example, if the information regarding the use fee is transmitted to the provider of the specification data, the use fee of the specification data can be charged, and therefore the quality of the semi-finished lens whose specification data is outputted, can be improved.

### Brief description of the drawings

FIG. 1 is a schematic view of a design data providing system according to an embodiment of the present invention.
FIG. 2 is a block diagram showing a structure of a first terminal.
FIG. 3 is a block diagram showing a structure of a second terminal.
FIG. 4 is a block diagram showing a structure of a third terminal.
FIG. 5 is a block diagram showing a structure of a data server.
FIG. 6 is a block diagram showing a structure of an charging server.
FIG. 7 is a flowchart showing a design data providing method according to an embodiment.
FIG. 8 is a flowchart showing a design data providing method according to an embodiment.

### Detailed description of the Invention

An embodiment of the present invention will be described hereafter based on the drawings.

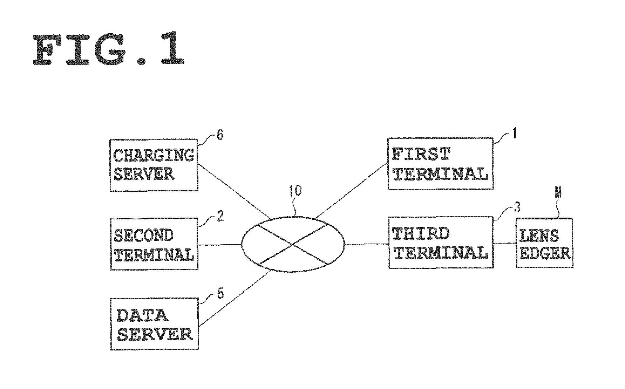

FIG. 1 is a schematic view showing an overall structure of a design data providing system according to this embodiment.

In FIG. 1, the design data providing system is configured so that a first terminal 1, a second terminal 2, a third terminal 3, a data server 5, and an charging server 6 are connected to each other via a network 10 as a communication line.

Wherein, the first terminal 1, the second terminal 2, the third terminal 3, the data server 5 , and the charging server 6 are mutually connected through the network 10 so that each kind of data can be transmitted and received. A structure of transmitting and receiving data such as an Internet and Intranet like LAN (Local Area Network), etc., based on a generally used protocol such as TCP/IP (Transmission Control Protocol/Internet Protocal), etc., can be utilized as the network 10.

The first terminal 1 is used by a semi-finished manufacturer who manufactures and sells the semi-finished lens.

The second terminal 2, the data server 5, and the charging server 6 are used by a lens design manufacturer.

The third terminal 3 is used by a lens processor. The third terminal 3 is connected to a lens edger M. Note that there may be a plurality of these manufacturers, or there may be a plurality of terminals, and FIG. 1 shows the first terminal 1, the second terminal 2, and the third terminal 3 one by one respectively.

The spectacle lens whose design data is provided by the design data providing system of this embodiment is an inner surface progressive addition lens, including a distance portion and a near portion having different refractive powers, and an intermediate portion in which a refractive power is progressively varied between the distance portion and the near portion, wherein curvature forming the distance portion, the near portion, and the intermediate portion, is added on an eyeball side surface, and an object side surface is formed into a spherical surface.

Such an inner surface progressive addition lens can be obtained by shape formation applied to a semi-finished lens according to prescription data (by cutting, polishing, and molding) based on the design data.

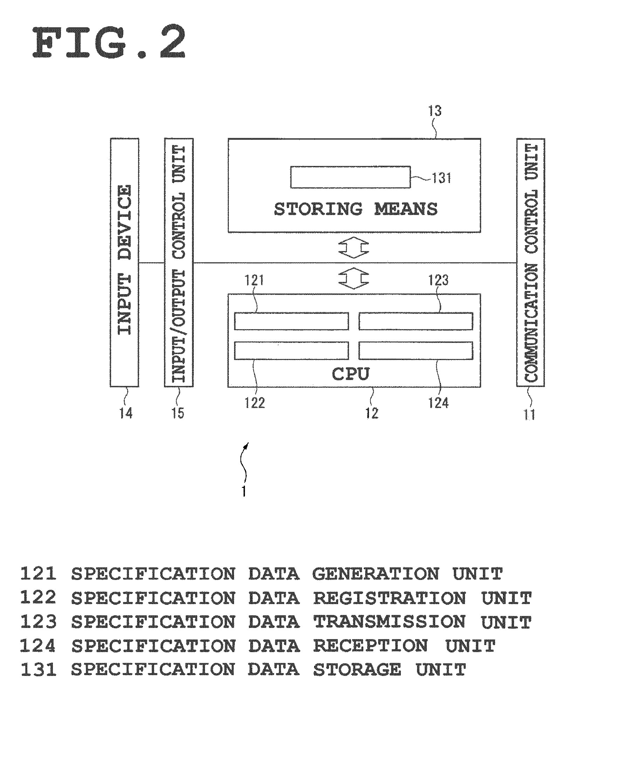

An outline of the first terminal 1 is shown in FIG. 2.

In FIG. 2, the first terminal 1 includes a communication control unit 11 configured to control input/output of data from the network 10; CPU (Central Processing Unit) 12 configured to execute various programs; a storage unit 13 configured to store data; and an input/output control unit 15 connected to an input device 14 such as a mouse, etc., configured to input data.

The CPU 12 has a function of extracting and applying processing to data which is inputted from the communication control unit 11, and includes a specification data generation unit 121, a specification data registration unit 122, a Specification data transmission unit 123, and a use fee information reception unit 124.

The specification data generation unit 121 generates specification data of the semi-finished lens such as a base curve, a diameter, and refractive index, a thickness, and shape data, etc., of the semi-finished lens for example, based on the data inputted from the input device 14.

The specification data registration unit 122 registers (stores) the specification data generated by the specification data generation unit 121, in a specification data recording unit 131 of the storage unit 13. The specification data stored in the specification data storage unit 131 is transmitted to the data server 5 via the communication control unit 11 from the specification data transmission unit 124.

The use fee information reception unit 124 receives information regarding use fee of data described later, which is transmitted from the data server 5.

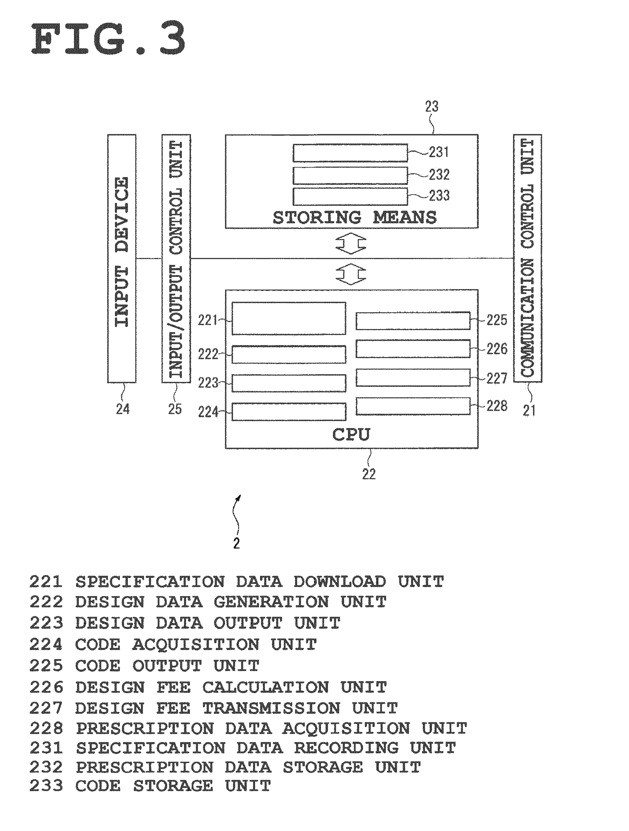

FIG. 3 shows an outline of the second terminal 2.

In FIG. 3, the second terminal 2 includes a communication control unit 21 configured to control input/output of data from the network 10; CPU 22 configured to execute various programs; a storage unit 23 configured store data; and an input/output control unit 25 connected to the input device 24.

The CPU 22 includes a specification download unit 221; a design data generation unit 222; a design data output unit 223; a code acquisition unit 224; a code output unit 225; a design fee calculation unit 226; a design fee transmission unit 227; and a prescription data acquisition unit 228.

The specification data download unit 221 downloads the specification data of the semi-finished lens registered in the data server 5. The specification data downloaded by the specification data download unit 221 is once stored in the specification data storage unit 231 of the storage unit 23.

The design data generation unit 222 generates design data of the spectacle lens based on the specification data downloaded by the specification data download unit 221, namely generates the deign data of the spectacle lens based on the specification data stored in the specification data storage unit 231. Wherein, the design data is the data used for cutting and polishing an inside concave surface (eyeball side surface) of the semi-finished lens so as to match the prescription data (data showing a prescription of the spectacle lens) such as an angle of astigmatism and an angle of prism, etc., and finishing the semi-finished lens into a finished product. The prescription data is acquired by the prescription data acquisition unit 228 via the input device 24 and the input control unit 25 or the network 10, and is stored in the prescription data storage unit 232 of the storage unit 23.

The design data output unit 223 outputs the design data of the spectacle lens generated by the design data generation unit 222, to the third terminal 3.

The code acquisition unit 224 acquires a code of the semi-finished lens associated with the specification data. It is general that the shape of the semi-finished lens is different depending on the product and prescription diopter. In this embodiment, there are a plurality of kinds of semi-finished lenses, and therefore a specification data code (including a product number, etc., for example) is attached to each semi-finished lens so as to correspond to each other.

The code output unit 225 outputs the code acquired by the code acquisition unit 224, to the data server 5. Note that the code acquired by the code acquisition unit 224 is stored in a code storage unit 233 of the storage unit 23. When there are a plurality of semi-finished manufacturers, information (such as ID number, etc.) for identifying the semi-finished lens manufacturers is included in the code, and the information including the code may be stored in the code storage unit 233 based on the code, for each semi-finished manufacturer.

The design fee calculation unit 226 acquires the number of times of processing (called processing number hereafter) applied to the spectacle lens processed by a lens edger, from the charging server 6, and calculates the design fee based on the processing number. In this embodiment, the design fee (a unit price) per single processing number previously stored in the storage unit 23, is called and the design fee is calculated by multiplying the unit price by the processing number.

The design fee transmission unit 227 transmits the design fee calculated by the design fee calculation unit 226, to the third terminal 3.

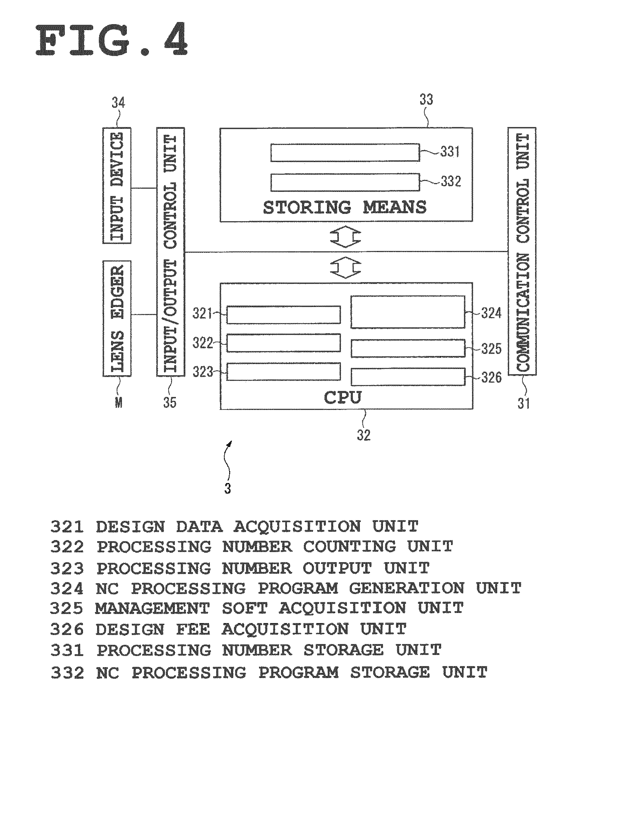

FIG. 4 shows an outline of the third terminal 3.

In FIG. 4, the third terminal 3 includes a communication control unit 31 configured to control input/output of data from the network 10; CPU 32 configured to execute various programs; a storage unit 33 configured to store data; and an input/output control unit 35 connected to the input device 34, and the input/output control unit 35 is connected to the lens edger M.

The lens edger M is an NC (Numerically Control) machining tool for edging the semi-finished lens into a spectacle lens as a finished product based on the design data, and although not shown, includes a numerical value control device that analyzes an NC processing program, obtains a moving amount and a moving speed of the tool of the machining tool body, and outputs them to the machining tool body; and the machining tool body having the tool and a driver, etc., for driving the tool.

CPU 32 of the third terminal 3 has a design data acquisition unit 321; a processing number counting unit 322; a processing number output unit 323; an NC processing program generation unit 324; a management soft acquisition unit 325; and a design fee acquisition unit 326.

The design data acquisition unit 321 acquires the design data of the spectacle lens outputted from the design data output unit 223 of the second terminal 2.

The processing number counting unit 322 counts the number of spectacle lenses as the finished product manufactured by the lens edger M. A signal from a counter (not shown) provided in the lens edger M is transmitted to the processing number counting unit 322 via the input/output control unit 35. The processing number calculated by the processing number counting unit 322 is stored once in a processing number storage unit 331 provided in the storage unit 33.

The processing number output unit 323 reads the processing number stored in the processing number storage unit 331, and outputs it to the charging server 6.

Note that the NC processing program generation unit 324 generates a program for driving the lens edger M. The generated NC processing program is stored in an NC processing program storage unit 332 of the storage unit 33. The NC processing program stored in the NC processing program storage unit 332 is transferred to the lens edger M via the input/output control unit 35.

The NC processing program is constituted of a series of instruction blocks, and includes route information and speed information, etc. The route information is the information showing an instruction of a specific moving locus, and has G-code for specifying a preparin function of operations such as linear interpolation and circular interpolation and a temporary halt, etc. Further, the speed information has F-code for specifying a feed speed.

A management soft acquired by a management soft acquisition unit 325 is a production management soft required for producing the semi-finished lens.

The design fee acquisition unit 326 acquires information regarding a lens design fee transmitted from the second terminal 2.

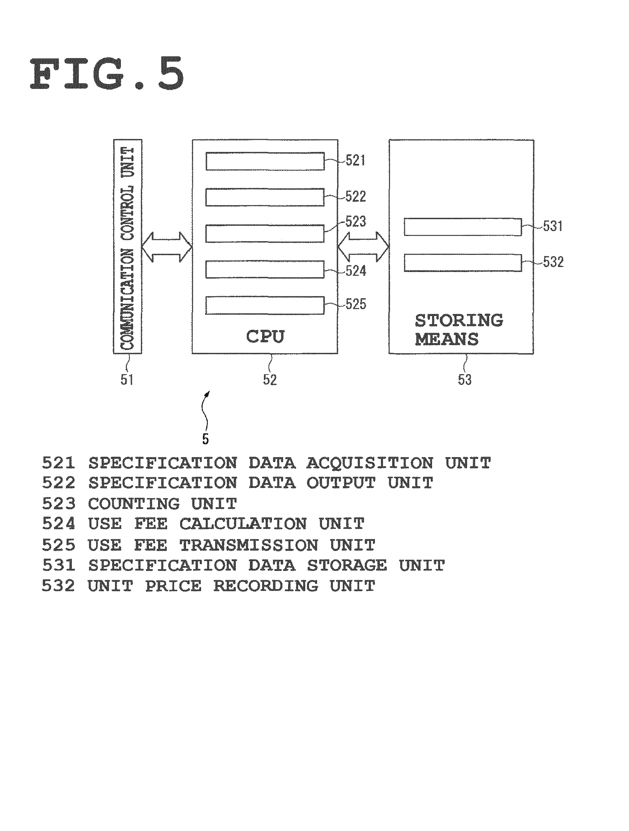

FIG. 5 shows an outline of the data server 5.

In FIG. 5, the data server 5 includes a communication control unit 51 configured to control input/output of data via the network 10; CPU 52 configured to execute various programs; and a storing means 53 for storing data. The communication control unit 51 realizes a connection to the first terminal 1, the second terminal 2, the third terminal 3, and the charging server 6, etc., via the network 10.

CPU 52 has a specification data acquisition unit 521; a specification data output unit 522; a counting unit 523; a use fee calculation unit 524, and a use fee transmission unit 525.

The specification data acquisition unit 521 acquires specification data of the semi-finished lens from the first terminal 1, and acquires the code of the semi-finished lens associated with the specification data from the code output unit 225. The Specification data acquired by the Specification data acquisition unit 521 is stored in the specification data storage unit 531 of the storage unit 53. In this embodiment, the specification data and the code are stored in association with each other.

When the code outputted from the code output unit 225 is acquired, the specification data output unit 522 outputs the specification data associated with a corresponding code, to the design data generation unit 222, by comparing the code stored in the specification data storage unit 531 and the acquired code.

The counting unit 523 (output frequency counting unit) counts the output frequency of the specification data outputted to the design data generation unit 222 from the specification data output unit 522.

The use fee calculation unit 524 calculates the use fee of data of the designed semi-finished lens, based on the output frequency counted by the counting unit 523 and the data use fee (use fee and unit price of specification data) per single output stored in a unit price storage unit 532 provided in the storage unit 53.

The use fee transmission unit 525 transmits the data use fee calculated by the use fee calculation unit 524, to the second terminal 2.

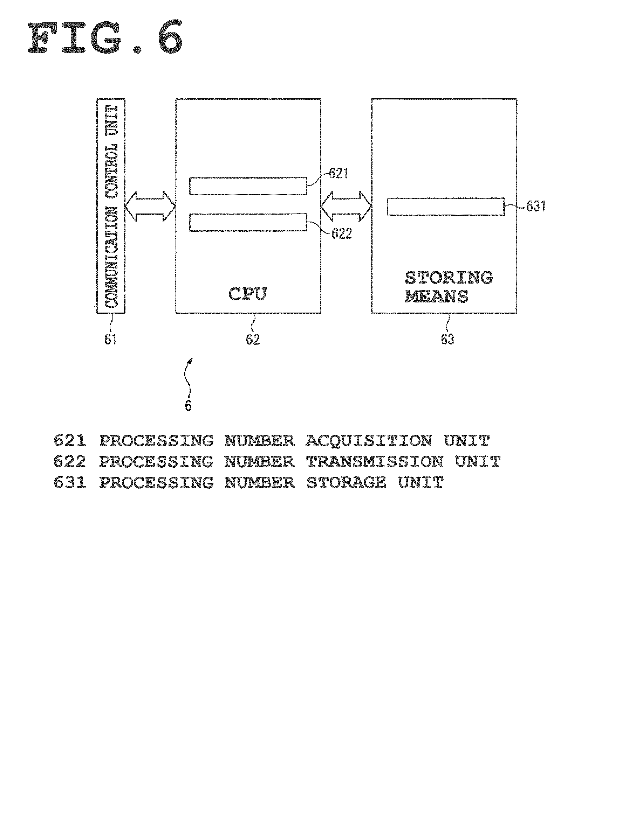

FIG. 6 shows an outline of the charging server 6.

In FIG. 6, the charging server 6 includes a communication control unit 61 configured to control output/input of data via the network 10; CPU 62 configured to execute various programs; and a storage unit 63 configured to store data.

CPU 62 has a processing number acquisition unit 621 configured to acquire the processing number outputted from the processing number output unit 323; and a processing number transmission unit 622 configured to transmit the processing number to the second terminal 2. The processing number acquired by the processing number acquisition unit 621 is stored in the processing number storage unit 631 provided in the storage unit 63.

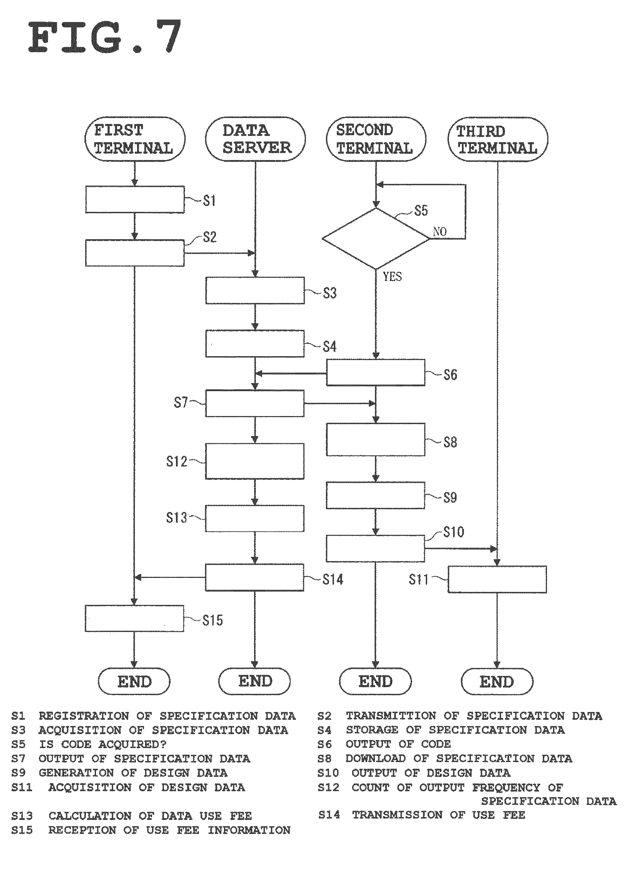

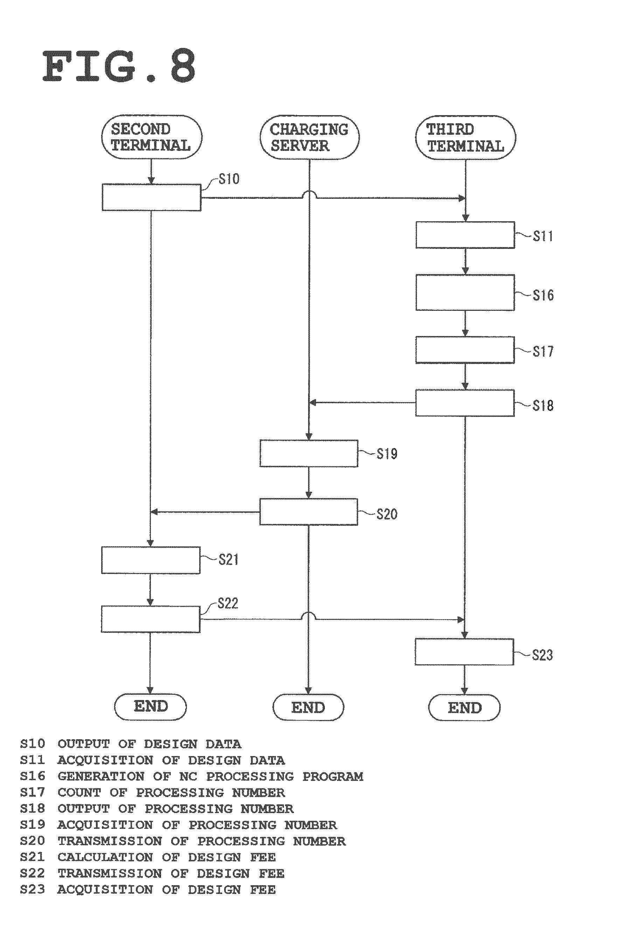

Next, explanation is given for a providing method of design data using the abovementioned design data providing system, based on flowcharts of FIG. 7 and FIG. 8.

A flow with the data server 5 as a center will described based on FIG. 7.

First, when the semi-finished manufacturer inputs the information such as a shape of the semi-finished lens, etc., via the input device 14 of the first terminal 1, the specification data of the semi-finished lens is generated by the specification data generation unit 121. In this embodiment, when the specification data is generated, the specification data generation unit 121 generates the code corresponding to the semi-finished lens. The generated Specification data and code are registered (stored) in a specification data recording unit 131 of the first terminal 1 by the specification data registration unit 122 (S1). The registered specification data is transmitted to the data server 5 by the specification data transmission unit 123 (S2), and is acquired by the specification data acquisition unit 521 of the data server 5 (S3). Transmission (S2) may be performed when the CPU 12 judges whether or not the specification data is stored in S1, or may be performed when it is so judged that the specification data is stored, or may be performed when an instruction of transmission is received by the CPU 12 from the input device. Further, in this embodiment, when the specification data is registered in S1, the code corresponding to the registered specification data is transmitted to the third terminal 3 via the communication control unit 11. In the third terminal 3, the code is acquired by the CPU 32 via the communication control unit 31, and the acquired code is stored in the memory means 33.

The specification data acquired in S3 is stored in the specification data storage unit 531 in association with the code of the semi-finished lens (S4). Note that the code is generated in the data server 5 when the specification data is acquired by the data server 5, and may be stored in the specification data storage unit 531 in association with the acquired specification data. When the code is generated by the data server 5, the code is transmitted to the third terminal 3 from the data server 5.

The second terminal 2 judges whether or not the code transmitted from the CPU 32 of the the terminal 3, is acquired by the code acquisition unit 224 (S5) . When it is so judged that the code is acquired (Yes in S5), the acquired code is outputted to the data server 5 from the code output unit 225 (S6). When it is so judged that the code is not acquired (No in S5), judgment (S5) is repeated.

The data server 5 that acquires the code outputted from the code output unit 225 by the CPU 52, compares the code stored in the specification data storage unit 531 and the acquired code. When there is a code that matches the acquired code, the specification data associated with the code is outputted to the second terminal 2 by the specification data output unit 522 (S7). When there is no code that matches the acquired code, the specification data is not outputted. The data server 5 makes the second terminal 2 notified of the matter that there is no corresponding code. The specification data outputted in S7 is acquired (downloaded) by the specification data download unit 221 (S8). The downloaded specification data is stored in the specification data storage unit 231. Prescription data is acquired by the prescription data acquisition unit 228 via the input/output device 24, and is stored in the prescription data storage unit 232. The design data generation unit 222 generates the design data of the spectacle lens based on the specification data stored in the specification data recording unit 231 and the prescription data stored in the prescription data storage unit 232 (S9). In this embodiment, the design data is generated by calculation using a design soft.

The design data generated in S9 is outputted to the third terminal 3 by the design data output unit 223 (S10). In the third terminal 3, the design data is acquired by the design data acquisition unit 321 (S11).

Output of the specification data in S7 is repeated every time the CPU 52 acquires the code from the second terminal 2. The output frequency of the specification data is counted by the counting unit 523 (S12). Regarding count, an output history is stored in the storing means 53, and the output frequency may be counted based on the history in a specific term, for example, for several months. Accumulated output frequency may be updated every time the specification data is outputted (S7). Further, when there a plurality of semi-finished manufacturers, the output frequency may be counted for each semi-finished manufacturer based on the code. The information regarding the output frequency in a specific term is transmitted to the use fee calculation unit 524, and the data use fee is calculated by multiplying the data use fee per single output stored in the unit price storage unit 532, by the output frequency (S13).

The information regarding the output frequency (single) is transmitted to the use fee calculation unit 524 from the counting unit 523 every time the specification data is outputted once, and the data use fee per single output may be added to the accumulated data use fee. The data use fee calculated by the use fee calculation unit 524 is transmitted to the first terminal 1 by the use fee transmission unit 525 (S14).

In the first terminal 1, the data use fee is received by the use fee information reception unit 124 (S15). Thus, the semi-finished manufacturer acquires the use fee information regarding its own use data.

A flow with the charging server 6 as a center, will be described based on FIG. 8.

In FIG. 8, as described above, when the generated design data is outputted to the third terminal 3 by the design data output unit 223 (S10), the design data is acquired by the design data acquisition unit 321 of the third terminal 3 (S11).

In the NC processing program generation unit 324, the program used for driving the lens edger M is generated based on the design data (S16). The generated program is stored in the NC processing program storage unit 332, and thereafter is transferred to the lens edger M via the input/output control unit 35.

In the lens edger M, the semi-finished lens corresponding to the specification data is edged into the spectacle lens, based on the NC processing program. The information regarding the number of times of processing applied to the edged spectacle lens is transmitted to the processing number counting unit 322 from the lens edger M, and the processing number is counted by the professing number counting unit 322 (S17).

The information regarding the processing number counted by the processing number counting unit 322 is outputted to the charging server 6 by the processing number output unit 323 (S18).

In the charging server 6, the information regarding the processing number is acquired by the processing number acquisition unit 621 (S19). The information regarding the processing number acquired in S19 is transmitted to the second terminal 2 by the processing number transmission unit 622 (S20).

In the second terminal 2, the design fee calculation unit 226 acquires the information regarding the processing number transmitted in S20, and calculates the design fee (S23). The calculated design fee is transmitted to the third terminal 3 by the design fee transmission unit 227 (S22). In the third terminal 3, the design fee transmitted in S23 is acquired by the design fee acquisition unit 326 (S23). Thus, the lens processor is notified of the design fee via the third terminal 3.

Accordingly, in the design data providing system of this embodiment, the data server 5 includes the specification data acquisition unit 521 configured to acquire the specification data of the semi-finished lens transmitted from the first terminal 1; the specification data storage unit 531 configured to store the specification data acquired by the specification data acquisition unit 521; and the specification data output unit 522 configured to output the specification data stored in the specification data storage unit 531 to the second terminal 2, and therefore the specification data is acquired from the first terminal 1 and can be outputted to the second terminal 2. amely, by using the first terminal 1, for example, the semi-finished manufacturer can output the specification data of the semi-finished lens to the second terminal 2 via the data server 5. The data server 5 includes the counting unit 523 configured to count the output frequency to the second terminal 2 from the specification data output unit 522; the use fee calculation unit 524 configured to calculate the data use fee of the semi-finished lens based on the frequency counted by the counting unit 523; and the use fee transmission unit 525 configured to transmit the data use fee calculated by the use fee calculation unit 524 to the first terminal 1, and therefore the semi-finished manufacturer using the first terminal can be notified of the use fee of the specification data.

Namely, for example, the lens design manufacturer can charge the use fee to the semi-finished manufacturer via the data server. Thus, the semi-finished manufacturer capable of registering the specification data can be limited, and therefore the specification data of the semi-finished lens whose production source (quality) is guaranteed, is stored in the data server 5. Therefore, for example, when the design data is generated based on the specification data outputted to the second terminal 2, and the semi-finished lens is edged based on the design data, a good quality semi-finished lens can be an object to be edged. Accordingly, the quality of the manufactured spectacle lens can be improved, compared with a case that there is no data server 5.

In this embodiment, the specification data storage unit 531 of the data server 5 stores the specification data in association with the code of the semi-finished lens, and the specification data output unit 522 outputs the specification data to the second terminal 2 when the code outputted from the second terminal 2 is acquired, and therefore the second terminal 2 can correctly and easily acquire the specification data of the semi-finished lens used for generating the design data, from the database 5.

The second terminal 2 includes the code acquisition unit 224 configured to acquire the code of the semi-finished lens associated with the specification data; and the code output unit 225 configured to output the code acquired by the code acquisition unit 224 to the specification data acquisition unit 521, wherein the specification data output unit 522 outputs the specification data to the design data generation unit 222 when the code outputted from the third terminal 3 is acquired. Therefore, based on the code of the semi-finished lens associated with the specification data, the specification data of the semi-finished lens specified by the third terminal 3 can be downloaded from the data server by the second terminal 2. Namely, the specification of the semi-finished lens to be edged can be correctly and easily acquired, and the design data providing system capable of creating the design data can be provided.

The third terminal 3 includes the processing number counting unit 322 configured to count the processing number of finished product of the spectacle lens manufactured by the lens edger M based on the design data of the spectacle lens acquired by the design data acquisition unit 321; and the processing number output unit 323 configured to output the processing number counted by the processing number counting unit 322, to the charging server 6. Further, the charging server 6 outputs the information regarding the processing number, to the second terminal 2. Accordingly, for example, the processing number is counted by the third terminal 3, and the design fee can be calculated by the second terminal 2 in accordance with the processing number, based on the number of edged spectacle lenses.

The design data providing system of this embodiment includes the charging server 6 having the processing number acquisition unit 621 configured to acquire the processing number outputted by the processing number output unit 323; the processing number transmission unit 622 configured to transmit the processing number acquired by the processing number acquisition unit 621 to the second terminal 2 ; and the second terminal 2 having the design fee calculation unit 226 configured to acquire the processing number transmitted from the processing number transmission unit 622 and calculate the design fee in accordance with the processing number, and the design fee transmission unit 227 configured to transmit the design fee calculated by the design fee calculation unit 226 to the third terminal 3. The second terminal 2 acquires the processing number via the charging server 6, and transmits the design fee of the lens calculated in accordance with the processing number, to the third terminal 3. Therefore, for example, the lens design fee can be correctly charged to the lens processor where the third terminal is used.

The present invention is not limited to this embodiment, and includes modifications and improvements, etc., in a range of achieving the object of the present invention.

For example, the embodiment shows a case that there is one second terminal 2. However, there may be a plurality of second terminals 2. When there a plurality of second terminals 2, the code (code of the second terminal) for identifying each second terminal 2, is stored in the data server 5, and the output frequency of the specification data is counted for each code of the second terminal. The use fee calculation unit 524 calculates the use fee for each code of the second terminal 2, and the use fee transmission unit 525 outputs to the first terminal 1, the code of the second terminal and the output frequency in association with each other. Thus, for example, the use fee of the specification data is charged to the semi-finished manufacturer via the first terminal 1, and based on the code of the second terminal 2, pay of the use fee can be distributed to the lens design manufacturer where each second terminal is used, based on the code of the second terminal 2. Accordingly, one lens design manufacturer may use a plurality of second terminals 2. In this case, the code for each second terminal may be used, or the code for each lens design manufacturer may be used.

In the embodiment, the charging server 6 and the data server 5 are constituted as separate devices. However, the charging server 6 and the data server 5 may be constituted from one device.

In the embodiment, the designed spectacle lens is formed as the inner surface progressive addition lens. However, the designed spectacle lens may be an outer surface progressive addition lens or may be a single focus lens.

In the embodiment, the code of the semi-finished lens is outputted to the second terminal 2 from the third terminal 3. However, the code may be outputted to the second terminal 2 from a production management terminal, and the design data generated in the second terminal 2 may be outputted to the third terminal 3. The production management terminal manages a production of the spectacle lens such as a design data acquisition state in the third terminal 3, or a receiving state of processing, and so forth. When there a plurality of third terminals 3, preferably the production management terminal makes the second terminal 2 notified of the third terminal 3 which is an output destination of the specification data. Thus, the production of the spectacle lens can be managed by the lens processor where the third terminal 3 is used, and therefore the spectacle lens can be more efficiently produced.

In the embodiment, the design data is generated by the second terminal 2 and is transmitted to the third terminal 3. However, the design data may be generated by the third terminal 3. When the design data is generated by the third terminal 3, the third terminal 3 includes each structure of the second terminal 2.

Further, when the semi-finished lens manufactured by the lens design manufacturer is manufactured by the lens processor, the first terminal 1 and the second terminal 2 may be one device.

### Description of Signs and Numerals

- 1: First terminal
- 2: Second terminal
- 3: Third terminal
- 5: Data server
- 6: Charging server
- 10: Network (communication line)
- 122: Specification data registration unit
- 124: Use fee information reception unit
- 211: Specification data download unit
- 222: Design data generation unit
- 223: Design data output unit
- 224: Code acquisition unit
- 225: Code output unit
- 226: Design fee calculation unit
- 227: Design fee transmission unit
- 321: Design data acquisition unit
- 322: Processing number counting unit
- 323: Processing number output unit
- 521: Specification data acquisition unit
- 522: Specification data output unit
- 523: Counting unit
- 524: Use fee calculation unit
- 525: Use fee transmission unit
- 531: Specification data storage unit
- 621: Processing number acquisition unit
- 622: Processing number transmission unit
- M: Lens edger

## Claims

1. A design data providing system, comprising:
a data server, a first terminal, a second terminal, and a third terminal connected via a communication line,
the data server comprising:
a specification data acquisition unit configured to acquire specification data of a semi-finished lens;
a specification data storage unit configured to store the specification data;
a specification data output unit configured to output the specification data stored in the specification data storage unit, to the second terminal;
a counting unit configured to count output frequency of the specification data;
a use fee calculation unit configured to calculate a use fee of the specification data based on the output frequency; and
a use fee transmission unit configured to transmit information regarding the use fee calculated by the use fee calculation unit, to the first terminal,
the first terminal comprising:
a specification data transmission unit configured to transmit the specification data to the data server; and
a use fee reception unit configured to receive the information regarding the use fee transmitted from the use fee transmission unit,
the second terminal comprising:
a download unit configured to acquire the specification data;
a design data generation unit configured to generate design data of the spectacle lens based on the specification data; and
a design data output unit configured to output the design data to the third terminal,
the third terminal comprising:
a design data acquisition unit configured to acquire the design data outputted from the design data output unit.

2. A data server, comprising
a specification data output unit configured to output specification data of a semi-finished lens;
a counting unit configured to count output frequency of the specification data;
a use fee calculation unit configured to calculate a use fee of the specification data based on the output frequency; and
a use fee transmission unit configured to transmit information regarding the use fee calculated by the use fee calculation unit.

3. A design data providing method, comprising:
outputting specification data of a semi-finished lens to a first terminal by a data server;
calculating a use fee of the specification data by the data server based on the output frequency;
transmitting information regarding the use fee, to a second terminal by the data server;
generating design data by the first terminal based on the specification data; and
outputting the design data to a third terminal by the first terminal.

4. A specification data providing method, comprising:
outputting specification data of a semi-finished lens by a specification data output unit;
counting output frequency of the specification data by a counting unit;
calculating a use fee of the specification data by a use fee calculation unit based on the output frequency; and
transmitting information regarding the calculated use fee by a use fee transmission unit.
